Europäisches Patentamt

European Patent Office

Office européen des brevets

(19)

(11) Publication number: **0 472 042 A1**

## EUROPEAN PATENT APPLICATION

(12)

(21) Application number: **91113154.8**

(22) Date of filing: **05.08.91**

(51) Int. Cl.5: **C11D 3/22**, C08B 31/18, C08L 3/10, C08L 3/02

(30) Priority: **13.08.90 IT 6763690**

(43) Date of publication of application:
**26.02.92 Bulletin 92/09**

(84) Designated Contracting States:
**AT BE CH DE DK ES FR GB GR IT LI LU NL SE**

(71) Applicant: **FERTEC - FERRUZZI RICERCA E TECNOLOGIA S.r.l.**
**Via XIII Giugno 8**
**I-48100 Ravenna(IT)**

(72) Inventor: **Santacesaria, Elio**
**Via Codogno 10**
**I-20139 Milano(IT)**
Inventor: **Gelosa, Davino**
**Viale Golgi 76**
**I-27100 Pavia(IT)**
Inventor: **Brussani, Gianfranco**
**Via Don Cabrio 3**
**I-13051 Biella (Vercelli)(IT)**

(74) Representative: **Rambelli, Paolo et al**
**Jacobacci-Casetta & Perani S.p.A. Via Alfieri 17**
**I-10121 Torino(IT)**

(54) Calcium-sequestering agents based on oxidised carbohydrates and their use as builders for detergents.

(57) A mixture including oxidised glucosidic oligomers including at least 60% by weight of glucosidic oligomers with degrees of polymerisation of from 2 to 10 which can be produced by the hydrolytic demolition of starches and/or dextrin with endoenzymes and the oxidation of the enzymatic hydrolytic demolition product with an oxidising agent selected from hypochlorite and periodate in association with chlorite is usable as a builder for detergents.

EP 0 472 042 A1

The present invention relates to calcium-sequestering agents based on oxidised carbohydrates, a method for their preparation, and their use as builders for detergents.

The tripolyphosphate STPP has been used for many years as a builder in detergents. Since this substance is held responsible for the eutrophication of water its use is controlled in many countries. As a result intensive research has taken place to identify new builders for inclusion in the formulations of detergents, to completely or partially replace the action of STPP. Naturally, as well as having good capabilities for sequestering calcium and magnesium, these new builders must also be biodegradable, nontoxic and cheap.

In this connection, the publication in Tenside Detergents 14, 5 (1977) of M. Diamantoglou et al (ref. 1) and German patent application DE-A-24 36 843 (ref. 2) propose the use of starch, cellulose or oxidation products and describe their sequestering properties. The products obtained by oxidation with hypochlorite or periodate and subsequently with chlorite contain chains with many carboxylic groups and therefore have high sequestering powers. The higher the degree of oxidation of these substances, however, the lower is their biodegradability.

As stated in the publications of N.S. Nieuwenhuizen et al in JAOCS, 60, 1, 44 (1983) (ref. 3) and M.M. Crutchfield et al. in JAOCS 55, 58 (1978) (ref. 4) as molecular weight decreases biodegradability increases but sequestering performance becomes worse. The publication reference 1 confirms that the biodegradability of polycarboxylates should increase as their molecular weights decrease and explains the apparent contradiction that oxidation products of wood and cellulose are more degradable than oxidised starch by the fact that the oxidation takes place in a heterogeneous phase and the oxidised products which are obtained in solution result from a chain-demolition process.

Starch, however, would remain intact since it is attacked in a homogenous phase and although its oxidation products show good sequestering power, they are not very biodegradable. In the same publication, it is indicated that maltodextrins are completely biodegradable but no data are given on their performance in terms of their sequestering abilities. The reason is expressed implicitly in the introduction to the work in which it is stated that polycarboxylated compounds with low molecular weights would have low sequestering powers.

In the course of research which was carried out by the Applicant and led to the present invention, it was observed that, surprisingly, once the low molecular weight hydrolysis products of starch and dextrin have been oxidised either individually or in mixtures so as to introduce carboxylic groups into their structure, they show good biodegradability as well as a greater sequestering power than the products obtained by the oxidation of starch or dextrin.

A subject of the present invention is therefore the use of oxidised glucosidic oligomers with degrees of polymerisation of from 2 to 10, preferably from 2 to 8, and mixtures thereof as builders for detergents.

The oligomers defined above include products of the hydrolytic demolition of starch and/or dextrin as well as compounds such as maltose, dimers, trimers and tetramers of maltose which have been oxidised, preferably by hypochlorite and/or periodate in association with chlorite.

A preferred embodiment of the invention uses as a builder for detergents a mixture including at least 60% by weight, preferably at least 75% by weight of glucosidic oligomers with degrees of polymerisation of from 2 to 10, preferably from 2 to 8, which can be produced by the hydrolytic demolition of starches and/or dextrin with endoenzymes and the oxidation of the enzymatic hydrolytic demolition products with oxidising agents selected from hypochlorite and periodate in association with chlorite. The mixture thus obtained constitutes a further subject of the present invention.

The oxidation process is preferably effected by sodium hypochlorite which is preferably used with a ratio of between 3 and 6 moles of hypochlorite per mole of glucoside units of the products subjected to oxidation. The oxidation reaction is preferably carried out with the pH between 8 and 10 and at a temperature of from 0 to 20$^\circ$C and preferably from 15 to 20$^\circ$C. The method of preparing the mixtures mentioned above constitutes a further subject of the invention as defined in the following claims.

The invention will be described further with reference to the following non-limiting examples.

Example 1: Hydrolysis

The same method is used for starch and for dextrin. 30 g of dextrin was heated to 40-45$^\circ$C in 500 cc of water until completely dissolved. 125 cc of a 0.1M KCl and 0.01M potassium acetate solution were added to the solution. The pH of the solution was 6. 90 mg of Bacillus subtilis were then added. The mixture was left to react for four hours at 45$^\circ$C and then left at ambient temperature for 10 hours.

Example 2: Oxidation with NaClO

10 g of carbohydrate was dissolved or suspended in 55 cc of water, 10 cc of a sodium hypochlorite solution containing 8-13% by weight of chlorine was added, the pH was adjusted to 8 with concentrated hydrochloric acid and this pH value was maintained during successive additions of hypochlorite up to a total of 200-300 cc on the basis of the initial strength so that there was a ratio of 3-6 moles of hypochlorite per mole of glucoside units.

After the addition of the hypochlorite, the pH was kept constant by the addition of concentrated NaOH. The temperature was kept at 15-20°C. The test was stopped when the residual chlorine became negligible. The reaction time varied with the type of substrate but the solution was in any case left alone for 24 hours, the temperature still being kept at 15-20°C. The oxidised sample was separated by double precipitation with alcohol in the case of starch or dextrin, or by evaporation in a rotavapor in other cases. The samples with low molecular weights can also be precipitated with alcohol but with very limited yields. Naturally, when the separation is effected by evaporation a considerable quantity of sodium chloride is present but this has little effect on the tests of the sequestering power and biodegradability.

## Example 3: Oxidation with periodate and chlorite

In this case, 18 g of starch or dextrin was used, for example, suspended in 100 cc of water and a stoichiometric quantity of sodium periodate (30 g) dissolved in 400 cc was added. The pH was kept at 4. The mixture was left to react at 15-20°C in the dark for 24 hours and the periodate content of the solution was then checked. The dialdehyde was produced and its precipitation was facilitated by alcohol or acetone. The precipitate was washed with alcohol or acetone and dried and, after it had been weighed, an 8 g sample was placed in 220 cc of a solution containing 22.6 g of sodium chlorite, to which 6.5 cc of glacial acetic acid were added slowly. The mixture was left at 15-20°C for 24 hours and washed in a flow of nitrogen to remove the remaining chlorite. Precipitation was effected with 2:1 alcohol and water. The product obtained was dried in order to determine its sequestering power and for the biodegradability test.

## Example 4: Determination of the sequestering power

The sequestering power (pS) is normally expressed in mg of calcium carbonate per gram of sequestering agent and can be determined by the titration of the sequestering agent with a solution of a calcium salt. A potentiometric electrode with a membrane was used to determine the equivalence point. The titration was stopped when the calcium ion concentration was 0.0005 moles/litre which is the solubility of the calcium ion in the carbonate. Alternatively, the effect of the addition of a solution of the sequestering agent to a solution of calcium containing, for example, 0.0025 moles/litre of calcium (14° German hardness) was investigated. The decrease in the hardness of the water as a result of the successive additions of sequestering agent was followed with the potentiometric electrode. This latter method has the advantage of showing immediately the quantity of the sequestering agent needed to achieve the desired calcium level in the water.

## Biodegradability tests

In the following examples, the ready biodegradability of the products obtained was investigated by the closed-bottle test published in the Official Gazette of the European Community L251 legislation, Italian language edition, 19th September 1984.

## Example 5

The enzymatic hydrolysis method described in Example 1 was applied to dextrin of the Snowflake 1911 type. Upon HPLC analysis, it was found that this dextrin contained 14% by weight of oligomers with less than 7 glucoside units. The distribution within this fraction was as follows:

| glucoside units | 1 | 2 | 3 | 4 | 5 | 6 | 7 |
|---|---|---|---|---|---|---|---|
| % by weight | 2.5 | 11.6 | 19.6 | 16.4 | 18.4 | 26.3 | 5.2 |

After hydrolysis, the same dextrin had 77% by weight of oligomers with less than 7 glucoside units. The distribution within this fraction was as follows:

| glucoside units | 1 | 2 | 3 | 4 | 5 | 6 | 7 |
|---|---|---|---|---|---|---|---|
| % by weight | 11 | 22.4 | 24.4 | 10.4 | 26.0 | 4.0 | 1.7 |

5 g of dextrin hydrolysed as described above was oxidised with sodium hypochlorite according to the method described in Example 2, the ratio of hypochlorite/glucoside units being kept at 5. After oxidation, precipitation with alcohol yielded 2.8 g from the initial 5 g with a sequestering power PS of 250. The PS of the products obtained by evaporation was 270. The product was biodegradable in each case (53% after 28 days in the closed-bottle test).

Example 6

5 g of maltotriose was oxidised with hypochlorite by the method described in Example 2 the ratio of hypochlorite/ /glucoside units being kept at 5. The final solution was divided into two parts and one part was precipitated with alcohol and then filtered producing 1.5 g of the product from the initial 5 and the other was evaporated to dryness. In the latter case the preliminary determination of the chlorides enabled its correct sequestering power to be determined. The PS value obtained was 280 in the first case and 300 in the second. The biodegradability of the product was very good in each case (>60% after 28 days in the closed-bottle test).

Example 7

5 g of maltose was oxidised with hypochlorite by the method described in Example 6. Two samples were produced, one by precipitation (1 g from 5) and one by evaporation. The PS was 320 for the first sample and 340 for the second. The product was readily biodegradable in each case (>60% after 28 days in the closed-bottle test).

Example 8 (Comparative)

Comparative tests were carried out by the oxidation of starch and Snowflake 1911 dextrin by the method described in Example 2 and with a ratio of 5 moles of hypochlorite/mole of glucoside units.

With the use of starch, about 10 g of oxidised starch was obtained and has a sequestering power of about 200. The product was not very biodegradable (8% after 28 days in the closed-bottle test).

In the case of dextrin with separation carried out in the same manner, 9.66 g of oxidised product was recovered and had a sequestering power of 225. The product showed poor biodegradability (<18% after 28 days in the closed-bottle test).

The starches used in the present invention are preferably starches of natural vegetable origin composed essentially of amylose and amylopectin.

Example 9

Detergent compositions were prepared with the use of the product of Example 5 as obtained by direct evaporation without precipitation with alcohol.

The detergent composition was as follows:

```
Builder (Ex. 5)                  100    parts    wt
LAS (linear alkyl sulphonate)      9      "       "
Soap                               2      "       "
Non ionic surfactant HT 11         5      "       "
Tetraperborate
(bleaching agent)                 20      "       "
Disilicate                         3      "       "
Carbonate                         10      "       "
```

4

EP 0 472 042 A1

The above composition was tested in respect of its antiredeposition and soil removal effect and showed results similar to those of conventional detergents including the same effective amount of the above components and including zeolites, sulphate and acrylic acid/maleic acid as the effective builder.

**Claims**

1. A mixture including oxidised glucosidic oligomers, characterised in that it includes at least 60% by weight of glucosidic oligomers with degrees of polymerisation of from 2 to 10 and is obtainable by the hydrolytic demolition of starches and/or dextrin with endoenzymes and the oxidation of the enzymatic hydrolytic demolition product with an oxidising agent selected from hypochlorite and periodate in association with chlorite.

2. A mixture according to claim 1, characterised in that it includes at least 75% of glucosidic oligomers with degrees of polymerisation of from 2 to 10, preferably from 2 to 8.

3. A mixture according to claim 2, characterised in that it is obtainable by the oxidation of the hydrolytic demolition product with hypochlorite with a ratio of from 3-6 moles of hypochlorite/mole of glucoside units.

4. The use of mixtures including oxidised glucosidic oligomers according to any one of claims 1 to 3 as builders for detergents.

5. The use of oxidised glucosidic oligomers with degrees of polymerisation of from 2 to 10, preferably from 2 to 8, and mixtures thereof as builders for detergents.

6. Use according to claim 5 in which the oligomers are selected from the group consisting of maltose and dimers, trimers and tetramers of maltose, oxidised with oxidising agents selected from hypochlorite and periodate.

7. A method of preparing a mixture of oxidised glucosidic oligomers useful as builders for detergents, characterised in that it includes the hydrolytic demolition of starches and/or dextrin by endoenzymes to produce a mixture containing at least 60% by weight of oligomers having degrees of polymerisation of from 2 to 10 and the oxidation of the hydrolytic demolition product with hypochlorite or periodate in association with chlorite.

8. A method according to claim 7, in which the hydrolytic demolition product contains at least 755 by weight of oligomers with degrees of polymerisation of from 2 to 8.

9. A method according to claim 7 or claim 8, in which the oxidation is effected by sodium hypochlorite with a pH of from 8 to 10 and at a temperature of from 0 to 20° C, preferably from 15 to 20° C.

10. A detergent composition comprising oxidised glucosidic oligomers with degree of polymerisation of from 2 to 10, preferably from 2 to 8 or mixtures thereof as the effective builder.

11. A detergent composition comprising a mixture of oxidised glucosidic oligomers according to any of claims 1 to 3.

5

European
Patent Office

EUROPEAN SEARCH
REPORT

Application Number

EP 91 11 3154

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 113 509  (HARRY WOODS LEACH et al.)<br>* claims; column 18, lines 7-12 *<br>– – – | 1,7 | C 11 D 3/22<br>C 08 B 31/18<br>C 08 L 3/10 |
| Y | FR-A-2 074 096  (FMC CORPORATION)<br>* page 1, lines 34-38; page 2, lines 1-31; page 3, lines 29-39; page 5, lines 27-38; claims 4-10 *<br>– – – | 1,7 | C 08 L 3/02 |
| A | FR-A-2 063 914  (UNILEVER NV)<br>* claims; page 3, lines 12-15,23-29; page 4, lines 33-38 *<br>– – – | 1-11 | |
| A | STARCH/STARKE vol. 41, no.9, September 1989, pages 348-354, Weinheim, DE; M. FLOOR et al.: "Preparation and Calcium complexation of oxidized Polysachorides"<br>* page 348,349, right-hand column, last paragraph *<br>– – – | 1 | |
| A | US-A-4 029 590  (J.H. FINLEY)<br>* claims *<br>– – – – – | 4-6,10 | |

| TECHNICAL FIELDS SEARCHED (Int. Cl.5) |
|---|
| C 11 D<br>C 08 B<br>C 08 L |

The present search report has been drawn up for all claims

| Place of search | Date of completion of search | Examiner |
|---|---|---|
| Berlin | 05 November 91 | PELLI-WABLAT B |